# FASCICULE DE BREVET EUROPEEN

(11) **EP 3 300 963 B1**
(45) Date de publication et mention de la délivrance du brevet: **15.05.2019**
(21) Numéro de dépôt: 17187279.9
(22) Date de dépôt: 22.08.2017
(51) Int. Cl.: B60R 21/34, B60R 19/18

(54) **VEHICULE COMPRENANT UN DISPOSITIF D'ABSORPTION DE CHOCS**
FAHRZEUG, DAS EINE STOSSDÄMPFENDE VORRICHTUNG UMFASST
VEHICLE COMPRISING A SHOCK-ABSORBING DEVICE

(30) Priorité: 29.09.2016 FR 1659377
(43) Date de publication de la demande: 04.04.2018
(73) Titulaire: PSA Automobiles SA, 78300 Poissy (FR)
(72) Inventeur: BESSETTE, Damien, 25150 Ecot (FR); GIGANDET, Nathalie, 25310 Thulay (FR); MERESSE, Ludovic, 25750 Arcey (FR)
(74) Mandataire: Fernandez, Francis Lionel

(56) Documents cités:
- EP-A1- 1 816 036
- EP-A2- 1 433 665
- WO-A1-2005/012043
- WO-A1-2015/153547
- JP-A- 2007 015 659
- JP-A- 2009 062 034
- JP-A- 2010 173 596
- US-B1- 6 685 243
- US-B2- 7 575 259

## Description

L'invention concerne les véhicules automobiles comprenant un dispositif d'absorption de chocs et concerne un tel dispositif d'absorption de chocs pour véhicule.

De manière à respecter les homologations actuelles, les véhicules modernes sont équipés d'un système d'absorption de chocs adapté à la gestion des chocs frontaux entre le véhicule et un piéton, en particulier au niveau de ses jambes. L'objectif est d'une part d'absorber l'énergie du choc et d'autre part de limiter les blessures infligées au piéton et de l'empêcher de passer en-dessous du véhicule.

A cet effet, le système d'absorption de chocs comprend généralement deux parties, une partie dite « voie basse » et une partie dite « voie haute » et la prestation en matière de choc piéton au niveau des jambes est assurée par un compromis de raideur entre la voie haute et la voie basse.

La voie basse est positionnée au niveau du déflecteur central du pare-chocs avant du véhicule et va « fouetter » le bas de la jambe du piéton afin d'éviter que ce dernier ne passe en dessous du véhicule. La voie haute est quant à elle positionnée au niveau de la poutre de pare-chocs avant du véhicule et permet de dissiper l'énergie du choc afin de limiter les blessures du piéton. L'objectif est de coucher au maximum la jambe afin de limiter le cisaillement du genou. A cette fin, la voie haute comprend un dispositif d'absorption d'énergie appelé « absorbeur jambe » qui se situe entre la poutre de pare-chocs et la peau de pare-chocs du véhicule. L'écrasement de l'absorbeur jambe, lors d'une collision, va placer la voie haute dans une position plus en arrière que la voie basse par rapport au véhicule, entrainant de ce fait le couchage de la jambe du piéton en direction du capot du véhicule.

Par ailleurs, le pare-chocs doit présenter une bonne tenue selon la direction longitudinale du véhicule. En particulier, il ne doit pas s'enfoncer sur une distance supérieure à 10 mm lors d'un appui de 25 kg selon l'axe longitudinal du véhicule. Le système d'absorption de chocs doit donc à la fois pouvoir assurer une tenue du pare-chocs et une bonne dissipation de l'énergie lors d'un choc piéton. Un compromis doit alors être trouvé pour assurer ces deux prestations antagonistes.

Habituellement afin de garantir une bonne dissipation d'énergie, l'absorbeur jambe est formé en un seul bloc et occupe la totalité du volume alloué entre la poutre haute de pare-chocs et la peau de pare-chocs. Cela signifie qu'il recouvre totalement la poutre haute de pare-chocs selon sa hauteur et va s'accoster parfaitement avec la peau de pare-chocs selon l'axe longitudinal du véhicule. Une telle configuration de l'absorbeur jambe s'adapte parfaitement aux véhicules dont l'assiette est dite « basse » et dont le pare-chocs au niveau de la plaque minéralogique arrive au-dessous des genoux du piéton.

Malheureusement, concernant les véhicules dont l'assiette est dite « haute », tels que les véhicules utilitaires de type « sport » aussi dénommés SUV, la plaque minéralogique est placée à hauteur des genoux du piéton. Une raideur est donc générée au niveau des genoux, qui va nuire à leur libre rotation et qui a pour conséquence un cisaillement important de ces derniers.

Des solutions permettant de limiter le cisaillement du genou lorsque le dispositif d'absorption est situé à son niveau ont été présentées dans l'art antérieur.

Le document US 6,685,243 présente un absorbeur d'énergie adapté pour réduire les dommages causés au genou d'un piéton lors d'un choc frontal avec un véhicule. L'absorbeur présenté est positionné contre la poutre de pare-chocs et comprend une section horizontale supérieure et une section horizontale inférieure reliées entre elles par une section horizontale médiane placée en retrait. Les sections horizontales supérieure et inférieure portent chacune un nez s'étendant vers l'avant du véhicule et dont la configuration permet d'attraper un genou impacté tout en absorbant l'énergie du choc. A cet effet, les deux nez se déforment en se courbant et s'écartant verticalement l'un de l'autre.

Le document US 7,575,259 présente un dispositif d'absorption d'un impact comprenant deux parties de même taille s'étendant vers l'avant du véhicule, une partie supérieure et une partie inférieure, reliées entre elles par une base verticale. La partie supérieure présente des caractéristiques physiques différentes de la partie inférieure en ce que la partie supérieure est adaptée pour absorber l'énergie d'un choc en se courbant alors que la partie inférieure est adaptée pour absorber l'énergie d'un choc par flambage (c'est à dire en s'écrasant sur elle-même).

Le document JP 2009 062034 A décrit un véhicule selon le préambule de la revendication 1.

Malheureusement, les solutions proposées restent insuffisantes concernant l'inter-prestation choc-piéton et tenue du pare-chocs, si bien qu'il existe toujours un besoin pour un véhicule doté d'un dispositif d'absorption de chocs qui permette à la fois de limiter le cisaillement du genou du piéton et à la fois d'assurer une bonne tenue de la peau de pare-chocs selon l'axe longitudinal du véhicule.

L'invention a pour objectif de répondre à au moins un des problèmes antérieurs en proposant un nouveau dispositif d'absorption de chocs entre un piéton et l'avant d'un véhicule qui montre des caractéristiques à la fois de souplesse et de rigidité selon un axe horizontal.

A cet effet, l'invention a pour objet un véhicule avec les caractéristiques de la revendication 1.

Selon des modes particuliers de réalisation, l'invention peut comprendre l'une ou l'autre des caractéristiques suivantes, prises isolément ou selon toutes les combinaisons possibles :
- Le dispositif d'absorption de chocs présente un profil en forme C et l'ensemble formé par la partie inférieure et par les extensions présentent une longueur supérieure à la longueur de partie supérieure, ladite différence de longueur étant comprise entre 5 mm et 15 mm, de préférence ladite différence de longueur est supérieure de 10 mm.
- La base et les parties inférieure et supérieure du dispositif d'absorption sont venues de matière et sont formées d'une mousse choisie parmi une mousse de polyéther, de polyester, de polypropylène, de polyéthylène ou de polyuréthane, de préférence en mousse de polyéthylène.

Comme on l'aura compris à la lecture de la définition qui vient d'en être donnée et selon un premier aspect, l'invention propose de doter un véhicule d'un dispositif d'absorption de chocs comprenant une partie inférieure et une partie supérieure, la partie inférieure accostant la peau de pare-chocs indirectement par le biais de plusieurs extensions placées sur son extrémité distale, c'est-à-dire sur l'extrémité opposée à celle s'étendant depuis la base dudit dispositif d'absorption. La présence d'une pluralité d'extensions réparties transversalement va permettre d'employer des matériaux montrant une rigidité suffisante pour la tenue du pare-chocs auquel l'ensemble formé par la partie inférieure et la ou les extensions est accosté, tout en respectant les critères pour le choc-piéton.

Selon un deuxième aspect, la partie haute est soit disposée en retrait de la peau de pare-chocs soit accostée à cette dernière mais en présentant une rigidité inférieure à celle de la partie inférieure. Cette configuration va là aussi contribuer à assurer le compromis recherché en matière de tenue du pare-chocs selon l'axe longitudinal du véhicule et en prestation choc-piéton. Le différentiel de rigidité entre les parties supérieure et inférieure ou le positionnement en retrait de la partie supérieure offrant la souplesse nécessaire au dispositif d'absorption afin de limiter le cisaillement du genou.

L'invention sera bien comprise et d'autres aspects et avantages apparaîtront clairement à la lecture de la description qui suit, donnée à titre d'exemple en référence aux planches de dessins annexées sur lesquelles :
- la figure 1 est une vue de face d'un dispositif d'absorption de chocs selon l'invention.
- la figure 2 est une coupe transversale de l'avant d'un véhicule comprenant un dispositif d'absorption de chocs selon l'invention.
- la figure 3a est une coupe transversale d'un autre mode de réalisation d'un dispositif d'absorption de chocs selon l'invention.
- la figure 3b est une vue de profil d'une extension d'un dispositif d'absorption de chocs de la figure 3a.

Dans la description qui suit, le terme « comprendre » est synonyme de « inclure » et n'est pas limitatif en ce qu'il autorise la présence d'autres éléments dans le dispositif d'absorption de chocs. Il est entendu que le terme « comprendre » inclut les termes « consister en ». Les termes « avant » et « arrière » ainsi que les directions « longitudinale » et « transversale » s'entendront par rapport à l'orientation générale du véhicule. Sur les différentes figures, les mêmes références désignent des éléments identiques ou similaires.

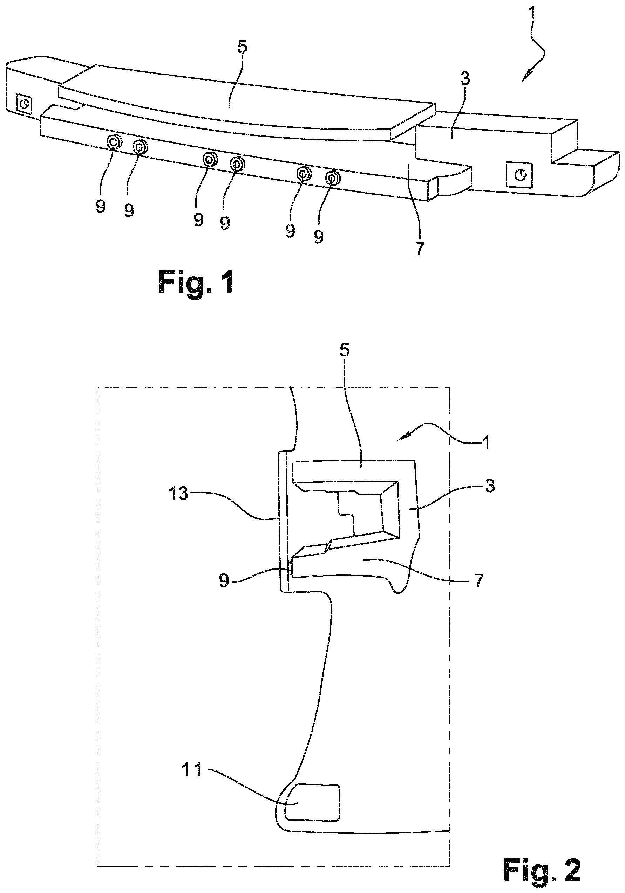

On se référera en premier lieu à la figure 1 qui est une vue de face d'un dispositif 1 d'absorption de chocs, désigné aussi dispositif d'absorption 1, pour un système de pare-chocs (représenté sur la figure 2) d'un véhicule. A cet effet, le dispositif d'absorption 1 est positionné en arrière de la peau de pare-chocs située au niveau de la plaque minéralogique selon la direction longitudinale du véhicule et contre la poutre de pare-chocs. Comme représenté sur cette figure, le dispositif d'absorption 1 comprend une base 3 verticale, une partie 5 supérieure et une partie inférieure 7 s'étendant horizontalement depuis la base 3 verticale en direction de l'avant du véhicule, la partie supérieure 5 étant positionnée au-dessus de la partie inférieure 7.

L'invention est remarquable en ce que le dispositif 1 comprend au moins une extension 9 qui s'étend dans le prolongement de l'extrémité distale de la partie inférieure 7 et dimensionnée pour accoster la peau 13 de pare-chocs et en ce que la partie supérieure 5 est :
- soit dimensionnée pour que son extrémité distale n'accoste pas la peau 13 de pare-chocs c'est-à-dire qu'il subsiste un espacement entre son extrémité distale et la peau de pare-chocs, ou,
- soit formée d'un matériau montrant une rigidité inférieure au matériau formant ladite partie inférieure.

Dans le mode de réalisation représenté sur la figure 1, la partie supérieure et la partie inférieure sont séparées par une ouverture, de manière à ce que le dispositif d'absorption 1 présente un profil en forme de « C », formant un évidement au niveau du genou. Lors d'un choc, la configuration en forme de « C » du dispositif d'absorption 1 permet à la partie supérieure 5 d'être courbée en direction de la partie inférieure 7. Ainsi il est possible de moduler la raideur globale du dispositif d'absorption 1 afin de ne pas cisailler le genou du piéton, en jouant notamment sur la taille de l'ouverture séparant les parties (5, 7) supérieure et inférieure.

La figure 2 est une coupe transversale de l'avant d'un véhicule selon l'invention comprenant un dispositif d'absorption 1 représenté sur la figure 1. Cette figure illustre l'agencement spécifique du dispositif d'absorption 1 de l'invention par rapport à la peau 13 de pare-chocs au niveau de la plaque minéralogique du véhicule. Il est clairement visible sur cette figure que les extensions 9 par leur accostage de la peau 13 de pare-chocs agissent comme une zone d'appui pour cette dernière, permettant à la peau de pare-chocs 13 lors d'un choc de tenir en position selon l'axe longitudinal du véhicule. Ainsi les extensions assurent la prestation de tenue de la peau 13 de pare-chocs.

Les extensions 9 présentant une raideur inférieure à la partie inférieure 7, elles influent peu sur les propriétés d'absorption de chocs provenant de la disposition de la partie inférieure 7 en retrait de la peau 13 de pare-chocs.

Les extensions 9 s'étendent horizontalement dans la même direction que la partie inférieure 7, de préférence les extensions 9 s'étendent horizontalement dans la même direction que la partie inférieure 7 depuis son extrémité distale et présentent une longueur comprise entre 5 et 15 mm, de préférence encore la ou les extensions présentent une longueur de 10 mm.

Selon une variante de l'invention, les extensions 9 sont formées dans le même matériau que la partie inférieure 7 mais avec une densité plus faible.

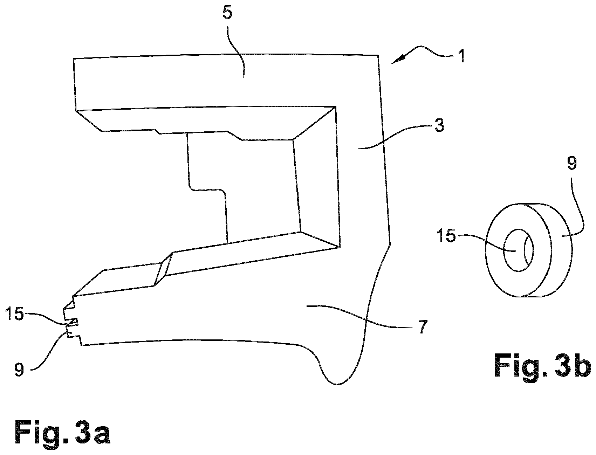

Eventuellement, les extensions 9 peuvent être ajourées, comme il est représenté sur les figures 3a et 3b. Un tel ajourage (15) permet pour une même hauteur de l'extension de diminuer sa raideur. Il est en effet intéressant que les extensions 9 soient la plus haute possible de manière à présenter la plus grande zone d'appui possible contre la peau de pare-chocs. Cependant une hauteur trop importante pouvant entrainer une trop grande raideur, il devient alors possible de moduler cette raideur par ajourage.

Selon un mode de réalisation de l'invention et comme il est visible sur la figure 2, l'ensemble formé par la partie inférieure 7 et par les extensions 9 s'étend sur une longueur supérieure à celle de la partie supérieure 5 selon la direction longitudinale du véhicule, de sorte à ce qu'il subsiste un espacement entre l'extrémité distale de la partie supérieure 5 et la peau 13 de pare-chocs. De ce fait, la peau de pare-chocs en regard de la partie supérieure 5 pourra être déformée et ne fera pas obstacle à la rotation du genou. Dès lors la jambe du piéton peut être couchée en direction du capot du véhicule. Il est à noter que la partie supérieure 5 ne doit pas se retrouver trop en retrait de la peau 13 de pare-chocs, afin d'une part d'éviter que cette dernière ne soit trop déformée, et d'autre part pour absorber rapidement l'énergie provenant du choc. A cet effet, l'ensemble formé par la partie inférieure 7 et par les extensions 9 présente une longueur supérieure à la longueur de partie supérieure 5, la différence de longueur étant comprise entre 5 mm à 15 mm, de préférence la différence de longueur est de 10 mm.

Selon une mise en oeuvre de l'invention, et comme il est représenté sur la figure 2, la base et les parties inférieure 7 et supérieure 5 présentent un profil en forme de « C » et les parties inférieure 7 et supérieure 5 présentent une même longueur. Ainsi le dispositif 1 montre des capacités d'absorption de choc proches ou identiques en parties supérieure et inférieure.

Selon une autre mise en oeuvre préférée de l'invention non représentée, la base et les parties inférieure et supérieure présentent un profil en forme de « C » et la configuration de la partie inférieure 7 est plus épaisse que la partie supérieure 5. Cette différence d'épaisseur des parties supérieure et inférieure permet de générer une différence de raideur de ces deux parties formées dans le même matériau.

Il est à noter que le système de pare-chocs peut comprendre par ailleurs une poutre 11 de pare-chocs inférieure dite « voie basse » au niveau du déflecteur central, comme il est représenté sur la figure 2. Comme il est visible sur cette figure, la poutre 11 de pare-chocs inférieure s'étend de préférence sur une longueur supérieure à celle de la partie supérieure 5 et de la partie inférieure 7 selon la direction longitudinale du véhicule. De cette manière, lors d'un choc avec la jambe d'un piéton, cette dernière sera plus facilement couchée.

On se tournera à présent vers la figure 1 qui illustre un mode de réalisation de l'invention. Dans ce mode de réalisation le dispositif d'absorption 1 comprend une pluralité d'extensions 9 réparties selon la direction transversale du véhicule sur l'extrémité distale de la partie inférieure 7 et disposées espacées les unes des autres. De préférence, et comme il est représenté sur la figure 3b, chaque extension est un cylindre droit formant un pion. De préférence encore, les pions présentent un diamètre inférieur à la hauteur la partie inférieure 7 selon la hauteur du véhicule.

Le nombre et la taille de chaque extension 9 peut être modulé de manière à jouer sur la déformation de la peau de pare-chocs. En l'occurrence plus il y a d'extensions 9 ainsi que plus ces extensions 9 ont des dimensions réduites par rapport à la partie inférieure 7, plus la peau de pare-chocs pourra se déformer. Il est possible ainsi d'obtenir une souplesse et une rigidité modulable en fonction des besoins souhaités.

Dans les différents modes de réalisation de l'invention, la base et les parties inférieure et supérieure du dispositif d'absorption 1 sont formées d'une mousse choisie parmi une mousse de polyéther, de polyester, de polypropylène, de polyéthylène ou de polyuréthane, de préférence en mousse de polyéthylène. Par exemple, la mousse peut être une mousse de polyéthylène expansé de type NEOPOLEN®. Lorsque les extensions sont dans un matériau présentant une rigidité inférieure au matériau de la partie inférieure, celles-ci sont soit formées dans la même mousse que la partie inférieure mais avec une densité inférieure soit dans une mousse avec une rigidité inférieure.

Les extensions 9 sont venues de matière avec la partie inférieure 7 comme il est représenté sur la figure 3a.

Selon un autre mode de réalisation de l'invention (non représenté), la partie supérieure du dispositif d'absorption est venue de matière avec la ou les extensions et est formée d'un matériau présentant une rigidité inférieure au matériau formant la partie inférieure, et la partie supérieure est dimensionnée pour s'étendre sur une longueur supérieure à celle de la partie inférieure selon la direction longitudinale du véhicule de sorte à accoster la peau de pare-chocs. Dans ce mode de réalisation, le profil du dispositif d'absorption est préférentiellement plein, sans évidement central.

Ainsi la partie supérieure est en contact avec la peau de pare-chocs, ce qui lui permet d'assurer la tenue de la peau de pare-chocs en partie supérieure du dispositif d'absorption et augmente dès lors la tenue de la peau de pare-chocs par le dispositif d'absorption. La raideur de l'ensemble formé par la partie supérieure et la ou les extensions est inférieure à celle de la partie inférieure et permet ainsi d'assurer le couchage de la jambe du piéton lors du choc.

Dans ce mode de réalisation les parties inférieure et supérieure sont chacune formées d'une mousse soit de matériaux différents, soit de matériaux similaires mais présentant une densité différente de sorte que la densité de la mousse formant la partie supérieure et la ou les extensions soit inférieure à la densité de la mousse formant la partie supérieure.

## Revendications

1. Véhicule comprenant un système de pare-chocs avant comprenant une poutre, une peau (13) de pare-chocs et un dispositif (1) d'absorption de chocs disposé entre la poutre et la peau (13) de pare-chocs ; le dispositif d'absorption (1) comprenant
- une base (3) verticale placée contre la poutre ;
- une partie supérieure (5) et une partie inférieure (7) s'étendant horizontalement depuis la base (3), en direction de l'avant du véhicule, la partie supérieure (5) étant positionnée au-dessus de la partie inférieure (7), la partie supérieure (5) étant soit dimensionnée pour qu'il subsiste un espacement entre son extrémité distale et la peau (13) de pare-chocs ou soit formée d'un matériau montrant une rigidité inférieure au matériau formant ladite partie inférieure (7), le véhicule étant **caractérisé en ce que** le dispositif d'absorption (1) comprend au moins une extension (9) qui s'étend dans le prolongement de l'extrémité distale de la partie (7) inférieure et qui est dimensionnée pour accoster la peau (13) de pare-chocs et **en ce que** le dispositif d'absorption (1) comprend en outre une pluralité d'extensions (9) sous forme de pions, venues de matière avec la partie inférieure (7), répartis selon la direction transversale du véhicule sur l'extrémité distale de la partie inférieure (7) et disposés espacés les uns des autres.

2. Véhicule selon la revendication 1, la partie supérieure (5) étant dimensionnée pour qu'il subsiste un espacement entre son extrémité distale et la peau (13) de pare-chocs, **caractérisé en ce que** le dispositif (1) d'absorption de chocs présente un profil en forme C et **en ce que** l'ensemble formé par la partie inférieure (7) et par les extensions (9) présentent une longueur supérieure à la longueur de partie supérieure (5), ladite différence de longueur étant comprise entre 5 mm et 15 mm.

3. Véhicule selon l'une des revendications 1 à 2 **caractérisé en ce que** la base (3) et les parties inférieure (7) et supérieure (5) du dispositif d'absorption (1) sont venues de matière et sont formées d'une mousse choisie parmi une mousse de polyéther, de polyester, de polypropylène, de polyéthylène ou de polyuréthane, de préférence en mousse de polyéthylène.

## Patentansprüche

1. Fahrzeug, das ein Frontstoßfängersystem umfasst, das einen Balken, eine Stoßfängerauskleidung (13) und eine Stoßabsorptionsvorrichtung (1), die zwischen dem Balken und der Stoßfängerauskleidung (13) angeordnet ist, umfasst; wobei die Absorptionsvorrichtung (1)
- eine vertikale Basis (3), die gegen den Balken platziert ist;
- einen oberen Teil (5) und einen unteren Teil (7) umfasst, die sich horizontal ausgehend von der Basis (3) in Richtung der Vorderseite des Fahrzeugs erstrecken, wobei der obere Teil (5) oberhalb des unteren Teils (7) positioniert ist, wobei der obere Teil (5) entweder bemessen ist, damit ein Abstand zwischen seinem distalen Ende und der Stoßfängerauskleidung (13) verbleibt, oder aus einem Material gebildet ist, das eine Steifigkeit aufweist, die kleiner ist als die des Materials, das den unteren Teil (7) bildet, Fahrzeug **dadurch gekennzeichnet, dass** die Absorptionsvorrichtung (1) mindestens eine Erweiterung (9) umfasst, die sich in der Verlängerung des distalen Endes des unteren Teils (7) erstreckt und bemessen ist, um an die Stoßfängerauskleidung (13) anzudocken, und dass die Absorptionsvorrichtung (1) außerdem eine Mehrzahl von Erweiterungen (9) in Form von Klötzen umfasst, die aus einem Stück mit dem unteren Teil (7) gebildet sind, die entlang der Querrichtung des Fahrzeugs auf dem distalen Ende des unteren Teils (7) verteilt und voneinander beabstandet angeordnet sind.

2. Fahrzeug nach Anspruch 1, wobei der obere Teil (5) bemessen ist, damit ein Abstand zwischen seinem distalen Ende und der Stoßfängerauskleidung (13) verbleibt, **dadurch gekennzeichnet, dass** die Stoßabsorptionsvorrichtung (1) ein Profil in C-Form aufweist, und dass die Baugruppe, die aus dem unteren Teil (7) und den Erweiterungen (9) gebildet ist, eine Länge aufweist, die größer ist als die Länge des oberen Teils (5), wobei der Längenunterschied zwischen 5 mm und 15 mm liegt.

3. Fahrzeug nach einem der Ansprüche 1 bis 2, **dadurch gekennzeichnet, dass** die Basis (3) und die unteren (7) und oberen (5) Teile der Absorptionsvorrichtung (1) aus einem Stück bestehen und aus einem Schaumstoff gebildet sind, der aus einem Polyether-, Polyester-, Polypropylen-, Polyethylen-oder Polyurethanschaumstoff, bevorzugt aus Polyethylenschaumstoff, ausgewählt ist.

## Claims

1. A vehicle including a front bumper system including a beam, a bumper skin (13) and a shock-absorbing device (1) arranged between the beam and the bumper skin (13); the absorbing device (1) including:
- a vertical base (3) placed against the beam;
- an upper part (5) and a lower part (7) extending horizontally from the base (3), in the direction of the front of the vehicle, the upper part (5) being positioned above the lower part (7), the upper part (5) being either dimensioned so that a space remains between its distal end and the bumper skin (13) or formed from a material displaying a lower rigidity than the material forming said lower part (7), the vehicle being **characterized in that** the absorbing device (1) includes at least one extension (9) which extends in the extension of the distal end of the lower part (7) and which is dimensioned to come alongside the bumper skin (13) and **in that** the absorbing device (1) includes in addition a plurality of extensions (9) in the form of pins, formed as an integral part of the lower part (7), distributed along the transverse direction of the vehicle on the distal end of the lower part (7) and arranged spaced apart from one another.

2. The vehicle according to Claim 1, the upper part (5) being dimensioned so that a space remains between its distal end and the bumper skin (13), **characterized in that** the shock-absorbing device (1) has a C-shaped profile and **in that** the assembly formed by the lower part (7) and by the extensions (9) have a greater length than the length of upper part (5), said difference in length being comprised between 5 mm and 15 mm.

3. The vehicle according to one of Claims 1 to 2, **characterized in that** the base (3) and the lower (7) and upper (5) parts of the absorbing device (1) are formed as an integral part and are formed from a foam selected from a polyether, polyester, polypropylene, polyethylene or polyurethane foam, preferably from polyethylene foam.
